# EUROPEAN PATENT SPECIFICATION

(11) **EP 0 944 939 B1**
(45) Date of publication and mention of the grant of the patent: **09.04.2003**
(21) Application number: 98947985.2
(22) Date of filing: 13.10.1998
(51) Int. Cl.: H01S 3/06, H01S 3/23

(54) **FIBER AMPLIFIER WITH REDUCED TEMPERATURE DEPENDENT GAIN FLATNESS DISTORTION**
FASERVERSTÄRKER MIT VERRINGERTER VERZERRUNG DES FLACHEN, TEMPERATURABHÄNGIGEN VERSTÄRKERPROFILS
AMPLIFICATEUR A FIBRES POSSEDANT UNE MOINDRE DISTORSION INHERENTE A LA TEMPERATURE DE LA PLANEITE DE GAIN

(30) Priority: 15.10.1997 KR 9752713
(43) Date of publication of application: 29.09.1999
(73) Proprietor: SAMSUNG ELECTRONICS CO., LTD., Suwon-City, Kyungki-do (KR)
(72) Inventor: Park, Nam-Kyoo, Seoul 151-061 (KR); Lee, Ju-Han, 441-400 Kyunggi-do (KR)
(74) Representative: Grünecker, Kinkeldey, Stockmair & Schwanhäusser Anwaltssozietät
(86) International application number: KR9800313
(87) International publication number: WO99019949

(56) References cited:
- EP-A1- 0 654 872
- EP-A2- 0 463 771
- US-A- 5 177 562
- YAMADA M. et al., "Temperature Insensitive Er3+-Doped Optical Fibre Amplifiers", ELECTRONICS LETTERS, 27 September 1990, Vol. 26, No. 20, pages 1649-1650.
- KAGI N. et al., "Temperature Dependence of the Gain in Erbium-Doped Fibers", J. LIGHTWAVE TECHN., February 1991, Vol. 9, No. 2, pages 261-265.

## Description

### TECHNICAL FIELD

The present invention relates to a fiber amplifier, more particularly to a fiber amplifier capable of reducing temperature dependent gain profile distortions.

### BACKGROUND ART

It has long been recognized that fiber amplifiers are an attractive alternative for amplifying optical signals. For example, fiber amplifiers have been proposed for the use as a booster amplifier to increase the output power from a telecommunication optical transmitter or as a telecommunication repeater to amplify optical signals without converting the optical signals into electrical signals.

Especially, the advent of the Erbium Doped Fiber Amplifier (EDFA) has had a profound impact on the design, manufacturing and performance of optical communication systems. Its low noise, high optical power, high gain, linearity, wide bandwidth, wavelength transparency, polarization independence and fiber compatibility have revolutionized optical communications by effectively removing the transmission and splitting loss barriers. As a result today, long haul terrestrial and transoceanic fiber communications, as well as local and wide area networks, have become realities.

However, the multichannel gain bandwidth of an EDFA is one of the critical parameters for characterizing the EDFA for dense wavelength division multiplexing (WDM) applications. There have been serious efforts to expand the gàin flattened bandwidth of EDFAs, including recently demonstrated Tellulite based EDFA, long wavelength EDFA, and Fluoride based EDFAs. In applying these amplifiers to the high-capacity real field WDM systems, it will be important to understand their temperature dependent gain characteristics. However, the research on temperature dependent characteristics on EDFAs has been limited to single channel applications concentrating especially on its gain characteristics, as is described in M. Yamada et al., "Temperature Dependence of Signal Gain in Er³⁺-Doped Optical Fiber Amplifiers," IEEE J. Quantum Electron., vol.28, no.3, p.640, 1992. It is well known that absorption and emission cross section is a function of temperature as well as wavelength, but there has not been serious research to find out the possible gain flatness distortion for multichannel situation. Part of the reason, for this lack of investigation may lie in the complexity of the exact measurement techniques on channel noise figure as well as the availability of multiple, high spectral purity transmitter sources.

Therefore, the inventors theoretically investigated temperature dependence of multichannel gain flatness for two types of fiber amplifiers employing aluminogermanosilicate and fluorozirconate based fibers through numerical simulation. The results show gain flatness variation as large as 2.7dB over ITU (International Telecommunication Union) specified temperature range. It was also found that this temperature-induced distortion on gain flatness could not be corrected with automatic gain control as the case of single channel application, suggesting active temperature control on EDF for WDM application.

The amplifiers were modeled as a homogeneously broadened three level system with spectral grid of 0.1nm, and spectral range of 120nm between 1480nm and 1600nm. This spectral range was wide enough to cover almost the whole absorption and emission cross section wavelength range of Erbium ion, including the pump and signal wavelength. Absorption cross sections at the temperature of interest were calculated by linear extrapolation relationships of cross section on temperature from previously published papers on silica and ZBLAN (Zirconium, Barium, Lantan, Aluminum, Natrium) fiber (Ref.: N. Kagi et al., "Temperature Dependence of the Gain in Erbium-doped Fibers," IEEE J. Lightwave Technol., vol.9, no.2, p.261, 1991; and J. Kemtchou et al., "Comparison of Temperature Dependences of Absorption and Emission Cross Sections in Different Glass hosts of Erbium-doped Fibers," OAA'96, p.126, paper FD2, 1996). This data set was then used to calculate emission cross sections at that temperature from McCumber theory. Other assumptions include fixed temperature spectral characteristics on pump diode, and passive components.

Simulation was performed with 41 input signals of 0.8mn spacing between 1531 and 1563nm, at -20dBm input power for each channel. Also included in the EDFA simulations were mid-stage spectral filters, which were designed to flatten the multichannel gain profile of the amplifier at the operating temperature of 25°C. The achieved gain flatness with these filters were within 0.2dB over 32nm for both amplifiers, and the output power per channel was around 0dBm for equalized EDFAs at 25 °C.

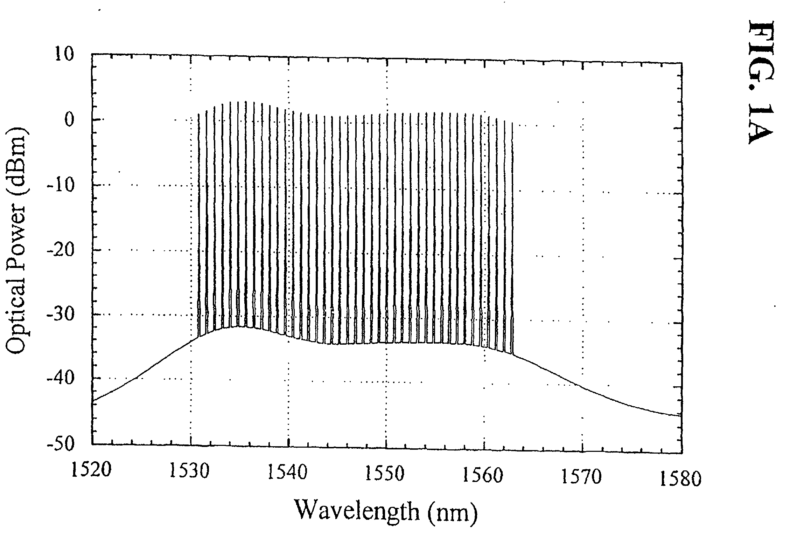

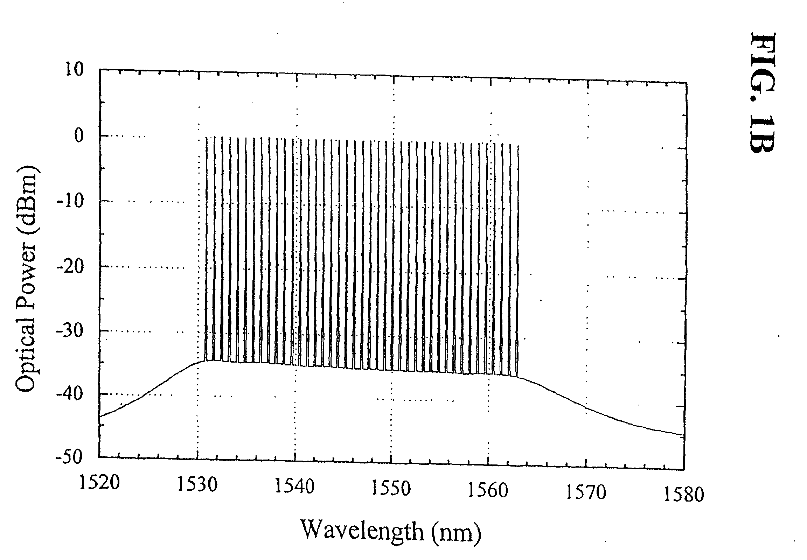

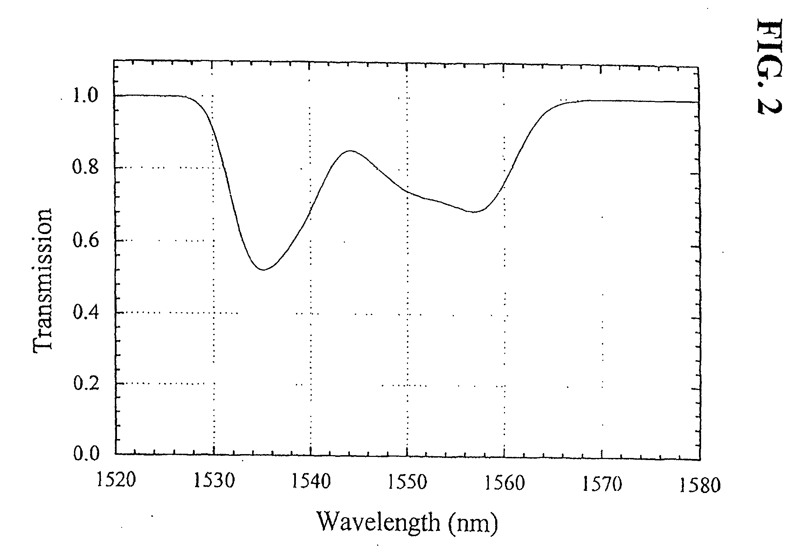

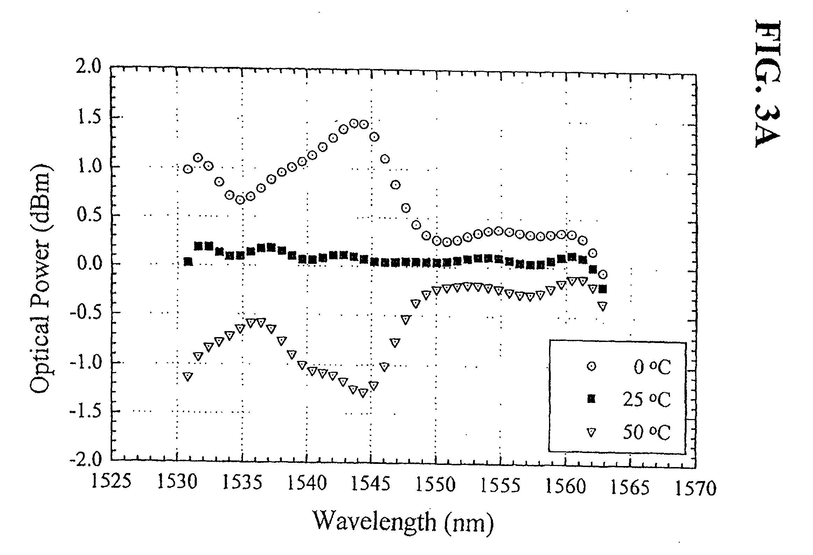

FIG. 1A and FIG. 1B show output spectra of a ZBLAN fiber amplifier without and with the filter at the temperature of 25 °C. Detailed spectral profile of the equalizing filter is also shown in FIG. 2, for the ZBLAN amplifier. By assuming the spectral shape of gain flattening filter, such as long period fiber grating, will be fixed to that of 25 °C even with the environment change in real field, the inventors calculated multichannel gain profile of these fiber amplifiers at 0°C and 50°C with corresponding absorption and emission cross sections at those temperatures, to see the temperature dependence of gain flatness from EDF only.

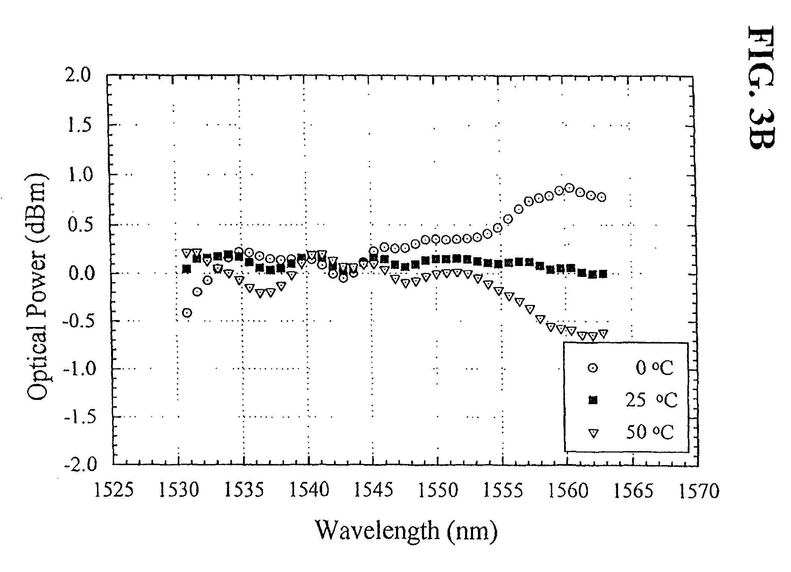

FIG. 3A and 3B illustrate variations on signal gain on different channels for ZBLAN fiber and silica based aluminum-codoped fiber at different operating temperatures, respectively. Referring to FIG. 3A and 3B, different amount of gain variations occurring on each channel is observed to destroy the gain flatness achieved with mid-stage passive spectral filter designed for 25°C. For ZBLAN based EDFA, the maximum gain variation against temperature is 2.7dB/50°C at the wavelength of 1544.4nm, and the wavelength range of gain variation within 1dB is less than 15nm at this operating condition. Adjustment on the pump power alone is not efficient to compensate the temperature dependent multichannel gain distortion, but mostly shifting the overall output power level only. The noise figure is also found to be a function of temperature, as expected, resulting up to +/-0.2dB/50°C variation at a given channel over the spectral range of interest. For silica based aluminum-codoped EDGA, the maximum gain variation is 1.45dB/50 °C at 1560.4nm and the wavelength range of gain variation within 1dB is 27nm, which is wider than that of the ZBLAN based EDFA. Still, silica based EDFA shows more temperature dependent noise figure variation at short wavelength (maximum variation is +/- 0.5dB/50°C at 1534nm), limiting the available temperature insensitive bandwidth for noise figure sensitive applications.

As described above, the inventors studied temperature dependent multichannel gain characteristics of silica-based aluminum codoped EDFA and ZBLAN based EDFA for dense WDM applications.. The result suggest that without the temperature control or active filter equalization, ZBLAN based EDFA at present state may cause severe gain fluctuations on WDM applications, especially for EDFA cascaded network in harsh environment. Though less severe, aluminum silica-based EDFA may also have similar problem on the channel gain, plus, severe fluctuations on noise figure at short wavelengths.

EP-A-0 654 872 defines an optical fiber amplifier according to the preamble of claim 1.

### DISCLOSURE OF THE INVENTION

Therefore, it is an object of the present invention to provide a fiber amplifier capable of flattening highly temperature dependent gain profiles.

In order to accomplish the aforementioned objects, the present invention provides an optical fiber amplifier having a composite optical fiber. The composite optical fiber is composed of at least two strands of optical fibers connected in series, which is made of different bases.

The optical fiber strands may be doped with rare-earth element, for example, erbium.

The optical fiber strands may preferably include a silica-based aluminum-codoped fiber and a ZBLAN fiber.

### BRIEF DESCRIPTION OF THE DRAWINGS

The detailed description particularly refers to the accompanying drawings in which:
FIG. 1A and 1B show output spectra of a ZBLAN fiber amplifier at the temperature of 25°C without and with an equalizing filter, respectively;
FIG. 2 shows the detailed spectral profile of the equalizing filter used in the ZBLAN fiber amplifier;
FIG. 3A and 3B show the variations of signal gain on different channels for ZBLAN fiber and silica based aluminum-codoped fiber at different operating temperatures, respectively;
FIG. 4 shows the gain profile of fiber amplifier according to the embodiment of the present invention;
FIG. 5 shows the variations of signal gain on different channels for the fiber amplifier according to the embodiment of the present invention at different operating temperatures.

### BEST MODE FOR CARRYING OUT THE INVENTION

In the embodiment of this invention, two types of erbium doped optical fibers are used to compensate the temperature dependent distortion of gain profile. The optical fibers are a silica-based aluminum-codoped fiber and a ZBLAN fiber, which have different temperature characteristics. Same lengths of optical fibers are connected in series.

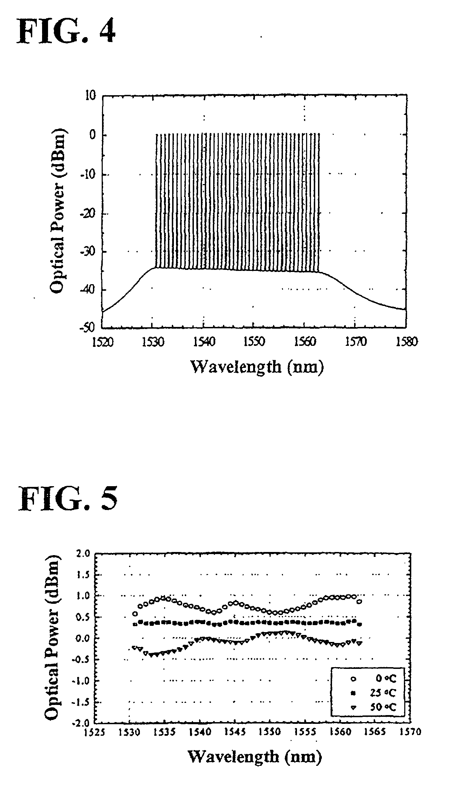

FIG. 4 shows the gain profile of a fiber amplifier according to the embodiment of the present invention. The profile was observed with 41 input signals of 0.8nm spacing between 1531 and 1563nm. An equalizing filter was used to flatten the gain profile.

FIG. 5 shows the variations of signal gain on different channels for the fiber amplifier according to the embodiment of the present invention at the different operating temperatures of 0°C and 50°C. Referring to FIG. 5, though the overall gain level is slightly shifted. the gain flatness for each channel is within 0.5dB.

From these results, it is concluded that the EDFA of the present invention is superior to those EDFA using silica-based aluminum-codoped fiber or ZBLAN fiber alone. Adjusting the pumping power can compensate the change in the overall gain level.

## Claims

1. An optical fiber amplifier, comprising:
a composite optical fiber doped with an excitable constituent and conveying an optical signal to be amplified;
pumping means optically coupled to said optical fiber for irradiating said optical fiber with pump light to excite said constituent;
wherein said optical fiber is composed of at least two strands of optical fibers connected in series, the strands of optical fibers being of different bases **characterised in that** the fibers have different temperature characteristics such as to compensate the temperature dependent distortion of the gain profile of the composite optical fiber within 0.5 dB.

2. The optical fiber amplifier of claim 1, wherein the strands of optical fibers are doped with rare-earth element.

3. The optical fiber amplifier of claim 2, wherein said rare-earth element is erbium.

4. The optical fiber amplifier of claim 3, wherein any one of the strands is a silica-based aluminum-codoped fiber and any other of the strands is a ZBLAN fiber.

## Patentansprüche

1. Optischer Faserverstärker mit:
einer zusammengesetzten optischen Faser, welche mit einem anregbaren Bestandteil dotiert ist und das zu verstärkende optische Signal überträgt;
einer Pumpeinrichtung, welche mit der optischen Faser zum Einstrahlen von Licht zum Anregen des Bestandteils gekoppelt ist, wobei die optische Faser aus wenigstens zwei Strängen von in Serie miteinander verbundenen optischen Fasern zusammengesetzt ist, welche Stränge von optischen Fasern unterschiedliche Basen aufweisen,
**dadurch gekennzeichnet,**
**dass** die Fasern unterschiedliche Temperaturcharakteristika aufweisen, wodurch eine temperaturabhängige Verzerrung des Übertragungsprofils der zusammengesetzten optischen Faser innerhalb von 0,5 dB kompensierbar ist.

2. Optischer Faserverstärker nach Anspruch 1,
**dadurch gekennzeichnet,**
**dass** die Stränge der optischen Faser mit einem seltenen Erdelement dotiert sind.

3. Optischer Faserverstärker nach Anspruch 2,
**dadurch gekennzeichnet,**
**dass** das seltene Erdelement Erbium ist.

4. Optischer Faserverstärker nach Anspruch 3,
**dadurch gekennzeichnet,**
**dass** einer der Stränge eine Quartz- basierte, Aluminium- codotierte Faser und ein anderer der Stränge eine ZBLAN- Faser ist.

## Revendications

1. Amplificateur à fibre optique, comprenant :
- une fibre optique composite dopée avec un composant excitable et transportant un signal optique à amplifier ;
- un moyen de pompage optiquement couplé à ladite fibre optique pour irradier ladite fibre optique avec une lumière de pompage pour exciter ledit composant ;
dans lequel ladite fibre optique est composée d'au moins deux brins de fibres optiques connectées en série, les brins des fibres optiques étant de bases différentes,
**caractérisé en ce que** les fibres ont différentes caractéristiques de température de façon à compenser la distorsion, dépendante de la température, du profil de gain de la fibre optique composite dans une marge de 0,5 dB.

2. Amplificateur à fibre optique selon la revendication 1, dans lequel les brins de fibres optiques sont dopés avec un élément des terres rares.

3. Amplificateur à fibre optique selon la revendication 2, dans lequel ledit élément des terres rares est l'erbium.

4. Amplificateur à fibre optique selon la revendication 3, dans lequel l'un quelconque des brins est une fibre à base de silice codopée d'aluminium et l'un quelconque des autres brins est une fibre ZBLAN.
